# EUROPEAN PATENT SPECIFICATION

(11) **EP 1 681 226 B1**
(45) Date of publication and mention of the grant of the patent: **02.07.2008**
(21) Application number: 06100294.5
(22) Date of filing: 12.01.2006
(51) Int. Cl.: B62D 33/02

(54) **Method for production of the load-carrying platform of industrial vehicle bodies**
Verfahren zur Herstellung der Fahrzeugladefläche von Nutzfahrzeug-Aufbauten
Procédé de fabrication de la plateforme porte-charge d'un véhicule utilitaire

(30) Priority: 17.01.2005 IT VR20050007
(43) Date of publication of application: 19.07.2006
(73) Proprietor: Natali, Gianfranco, 6924 Sorengo (CH)
(72) Inventor: Natali, Gianfranco, 6924 Sorengo (CH)
(74) Representative: Ponchiroli, Simone

(56) References cited:
- DE-U1- 20 008 071
- GB-A- 799 535
- GB-A- 2 007 601
- US-B1- 6 644 721

## Description

The present invention relates to a method for production of the load-carrying platform of industrial vehicle bodies, and is in particular intended for application for the production of industrial vehicle bodies more than 1500 mm wide.

As described in more detail below, the width of 1500 mm is a crucial parameter, since on one hand it is the maximum width of the sheets of sheet metal (coarse and/or galvanised and/or allumised) normally sold, and on the other hand it is the maximum width that can be worked by normal sheet metal punching equipment.

At present, the platform of vehicle bodies is usually made of sheet metal and consists of a plurality of parts adjacent to one another.

In particular, in one widespread embodiment the platform comprises two main parts and two secondary parts. While the latter form the zones of the platform adjacent respectively to the front panel and the rear panel, the two main parts form the rest of the platform, each extending from the central axis of the body to a lateral edge of the body.

The various parts of the platform can be connected to one another in many ways.

According to a first method the edge of each part is bent downwards into an L shape, and the two parts are connected by welding together the two portions of the L which point downwards.

According to a second method, the two parts are positioned so that they partly overlap one another. In this case, to guarantee the upper planarity of the body, one of the two parts is deformed under the other.

In contrast, according to a third known method the two parts are moved close to one another end to end and then connected using fixing flanges placed under the platform.

Therefore, in the prior art, production of the platform involves, firstly, forming the various parts of which it will consist. Then, assembly of the platform for the body involves, firstly, tacking of the entire platform (and therefore of the various parts of which it consists) directly on the longitudinal members and on the cross members which, when assembly is complete, will constitute the lower supporting chassis of the body, and secondly welding of all of the individual parts.

However, this known technology has several disadvantages.

Firstly, the need to tack both the platform and the chassis below significantly complicates construction, with a consequent increase in labour and costs.

Secondly, the methods currently used to connect the various parts of the body involve the need, on the cross members below or on the longitudinal members, to cut out material at the connecting zones between the various parts of the platform. Only in this way can the body be made to rest perfectly on the cross members or the longitudinal members. Obviously, this solution also has the disadvantage of requiring additional and relatively onerous working.

In addition, in the bodies known today, dirt and water tend to infiltrate the zones where the various parts of the platform are connected. As a result, the body tends to rust rapidly in said zones. In some cases all of the connecting zones are sealed in an attempt to overcome this disadvantage. However, said solution does not solve the problem and, moreover, is expensive to implement (it is normally done manually by an operator).

It is also known from document DE 20008071 U1 a load-carrying platform and a method for production of the load-carrying platform of industrial vehicle bodies of the type above described.

In this situation, the technical need which forms the basis of the present invention is to provide a method for production of the load-carrying platform of industrial vehicle bodies which overcomes the above-mentioned disadvantages.

In particular, the technical need of the present invention is to provide a method for production of the load-carrying platform of industrial vehicle bodies which allows simple and rapid production of the platform.

Another technical need of the present invention is to provide a method for production of the load-carrying platform of industrial vehicle bodies which allows bodies to be obtained that do not need material to be cut out of the cross members or the longitudinal members.

Yet another technical need of the present invention is to provide a method for production of the load-carrying platform of industrial vehicle bodies which is less subject to deterioration than conventional bodies.

The technical need specified and the aims indicated are substantially achieved by a method for production of the load-carrying platform of industrial vehicle bodies as described in the claims herein.

Further features and advantages of the present invention are more apparent in the detailed description below, with reference to a preferred, non-limiting, embodiment of a method for production of the load-carrying platform of industrial vehicle bodies, illustrated in the accompanying drawings, in which:
- Figure 1 illustrates two pieces of material from which a load-carrying platform of an industrial vehicle body will be obtained using the method in accordance with the present invention;
- Figure 2 illustrates a platform obtained using the method in accordance with the present invention;

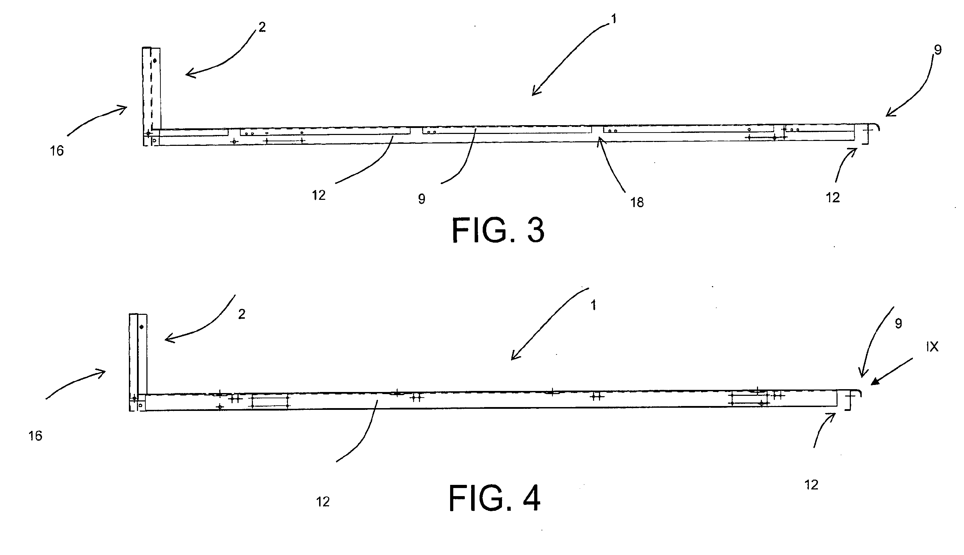

- Figure 3 is front view of the platform illustrated in Figure 2;
- Figure 4 is a cross-section of the body illustrated in Figure 2 according to line IV - IV;
- Figure 5 is rear view of the body illustrated in Figure 2;
- Figure 6 is a cross-section of the body illustrated in Figure 2 according to line VI - VI;
- Figure 7 is an enlarged view of a detail illustrated in Figure 2 indicated by the arrow VII;
- Figure 8 is an enlarged view of a detail illustrated in Figure 4;
- Figure 9 is an enlarged view of the detail IX illustrated in Figure 4; and
- Figure 10 is an enlarged view of the detail X illustrated in Figure 6.

With reference to the accompanying drawings, the numeral 1 denotes as a whole platform of an industrial vehicle body. The numeral 2 denotes a front panel of the body, the panel being rigidly connected to the platform 1.

The method for production of the load-carrying platform 1 disclosed is, as indicated, for the production of load-carrying platforms for industrial vehicle bodies which are more than 1500 mm wide.

This method comprises a series of operating steps whose order of execution may vary depending on requirements.

In particular, the method involves an operating step in which at least a first and a second shaped piece 3 of flat material are formed, an operating step in which the two pieces 3 are welded to one another along an edge 4, and an operating step in which the two pieces 3 are bent into the final shape. In general, a plurality of shaped pieces 3 may be formed then welded.

As indicated, the order of execution of the various steps may vary depending on requirements. In particular the order of the first two steps, forming and welding, may vary.

For example, in a first embodiment of the method disclosed, the forming step may take place first, and then be followed by the step of welding the two pieces 3 already formed to produce a third, single piece 5, and finally the step of bending the third piece 5.

In contrast, in a second embodiment the welding step takes place before the forming step. In this case, for example two continuous strips of sheet metal or two plates (not illustrated) may be welded together at a lateral edge. As a result, the two pieces 3 of shaped material are produced already connected to one another to form the third piece 5. In general, in the first and second piece 3 of flat material a main edge 4 can be identified, intended to allow its connection to the other piece 3. In some applications (for example, necessarily when welding precedes forming of the two pieces 3), the main edge 4 may be the edge of the plates or sheets from which the two pieces 3 must then be obtained.

In accordance with the present invention, the two lateral edges are welded to one another end to end with any type of welding suitable for the purpose, with or without weld material.

Advantageously, the method disclosed may or may not also comprise an operating step of smoothing the two pieces 3 of material at the weld made between the relative main edges 4. The need for this operating step depends on the type of welding previously used.

For example, the smoothing step may be carried out either with rolling of the third piece 5 at the weld, or with localised mechanical working on the weld.

Moreover, again in accordance with a preferred embodiment of the present invention, the step of bending the two pieces 3 of material allows production not only of the load-carrying platform 1 of the body, but also the front panel 2 of the body, integral with the load-carrying platform 1.

In this way, the panel and the platform 1 constitute a single piece 3.

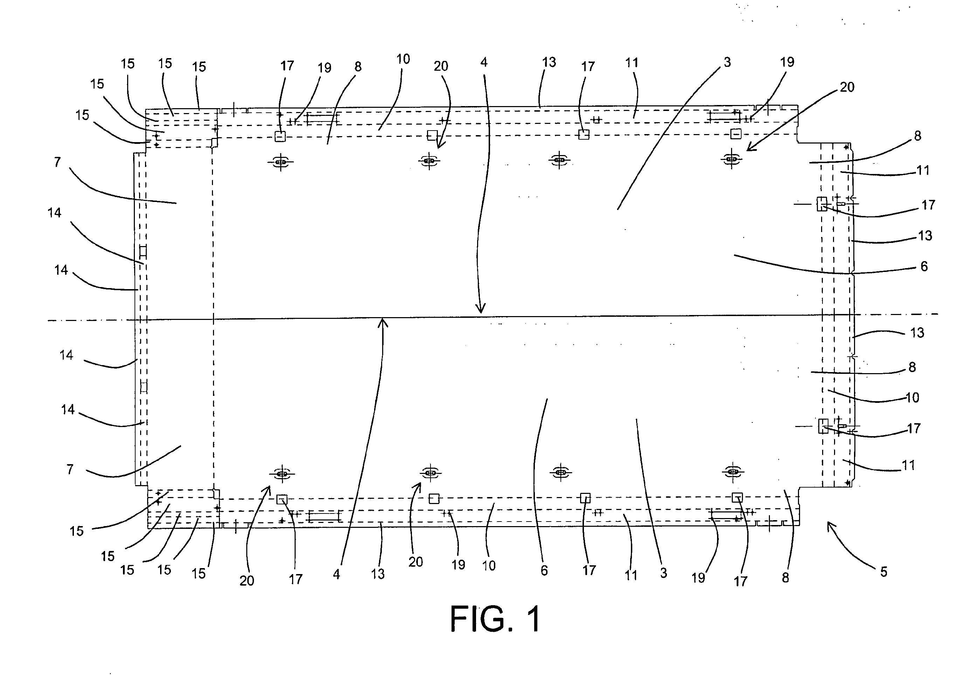

Figure 1 illustrates the two pieces 3 of shaped material joined to produce the third piece 5. In this case, the two pieces 3 are symmetrical.

As illustrated, in the preferred embodiment the two pieces 3 each form a longitudinal half of the body platform 1.

In the accompanying drawings, in each shaped piece 3 (first and second) a first main zone 6 may be identified, designed to constitute the platform 1 of the body and a second main zone 7 designed to constitute the front panel 2. There is also a first secondary zone 8 designed to constitute the upper part of a protective guard 9 (lateral or rear), a second secondary zone 10 designed to constitute the lower part of the protective guard 9, a third secondary zone 11 designed to constitute a part extending downwards of a supporting element 12, and a fourth secondary zone 13 designed to constitute the end part, extending towards the inside of the body, of the supporting element 12 connected to the guard 9.

Each piece 3 preferably has such secondary zones 8, 10, 11 and 13, both at its side and at its rear part.

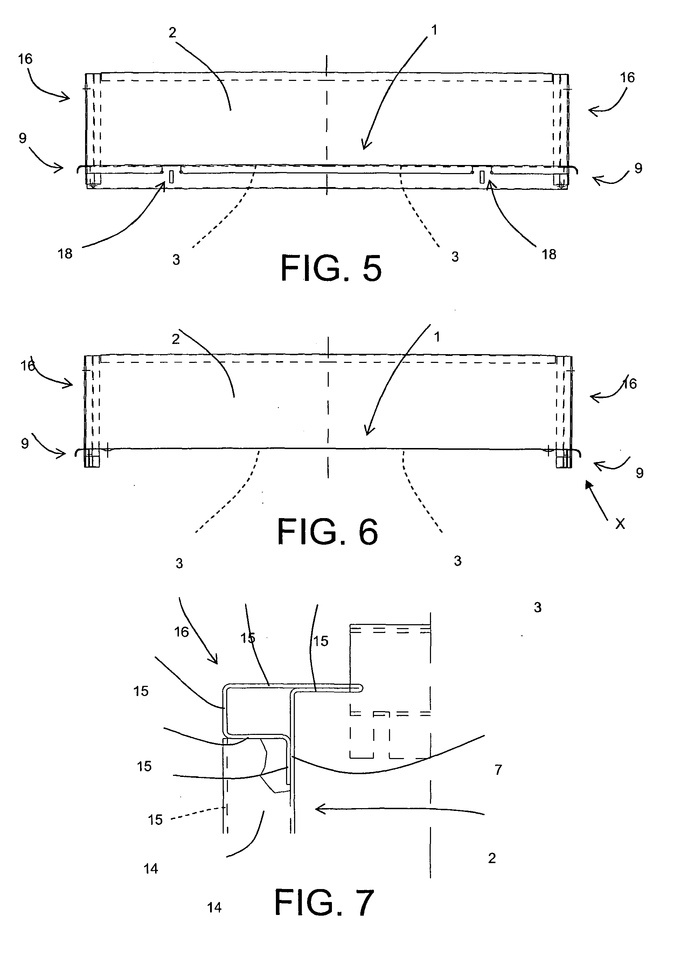

Moreover, on each piece 3 there may also be two first sub-zones 14 designed to constitute the upper edge of the front panel 2, and five second sub-zones 15 designed to constitute, by successive bending, a lateral upright 16 integral with the front panel 2 (Figures 1 and 7 bent view). Said uprights 16 are designed to allow on one hand fixing to the front panel of mechanisms for closing the side panels of the body, and on the other hand the mounting of a cab guard on top of the front panel.

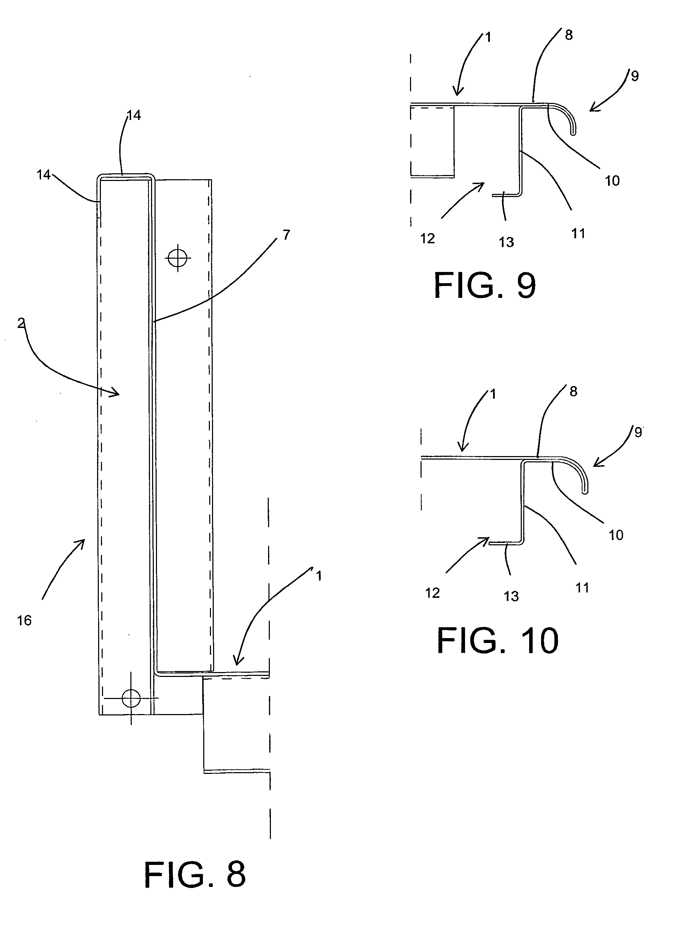

In Figure 1, each dashed line indicates a bending line which separates two zones and/or sub-zones. In contrast, there is no indication of a separating line between the first main zone 6 and each first secondary zone 8, since at that point the piece 3 of material is preferably bent downwards with a gradually increasing curvature, so that it forms an arc in cross-section (Figures 9 and 10).

From what has been indicated above, it follows that the bending step involves not just production of the front panel 2, but also production of at least one protective guard 9 along at least one edge of the platform 1.

Moreover, in the embodiment illustrated, the bending step involves forming three guards 9 (two lateral and one rear), the upper edge of the rear panel 2 and the two lateral uprights 16.

Therefore, the production of each guard 9 involves bending at least partly over itself the corresponding edge of the relative piece 3 of shaped material (that is to say, the second secondary zone 10 over the first secondary zone 8). Moreover, the step of production of the guard 9 preferably involves production of the supporting element 12 with the L-shaped cross-section under the guard 9 (consisting of the third and the fourth secondary zones 13), by additional bending of the lateral edge of the relative piece 3 of material (or of both pieces 3 for the rear guard 9).

In addition, during the step of forming the two shaped pieces 3, a plurality of openings 17 is made on each piece 3 of material, intended, after the bending step, to constitute passages for hinges used to fix the body panels.

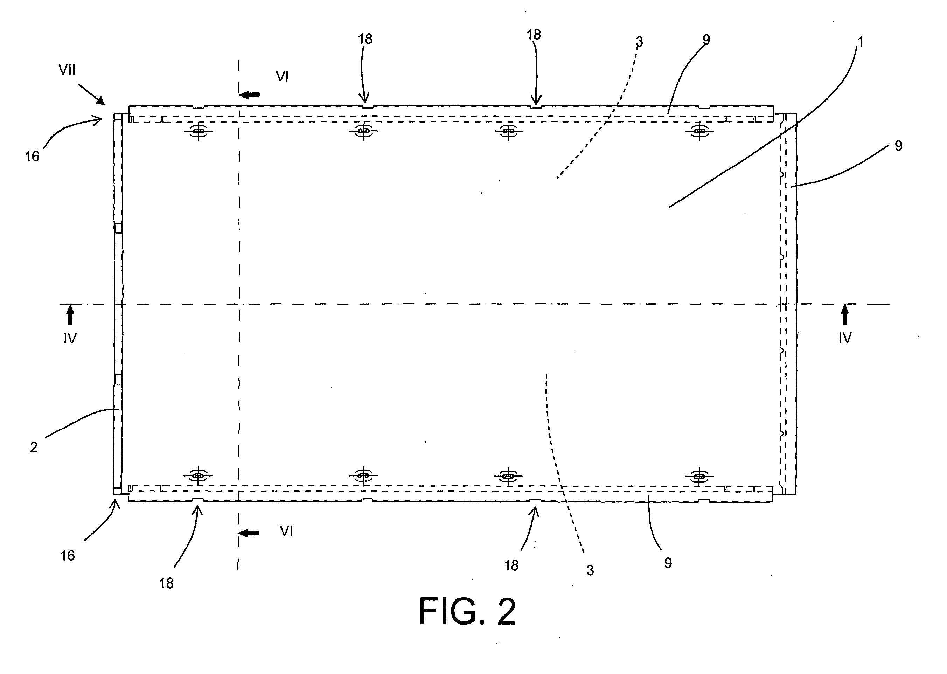

The openings 17 are made across the bending line between the first and the second secondary zones 10. In this way, when the guard 9 is complete, the latter has a plurality of passages 18 (Figures 2 and 5) through which the hinges for connecting the panels to the platform 1 can extend (not illustrated).

In addition, during the forming step holes 19 may also be made for subsequently fixing accessory parts to the body, as well as seats 20 for any load-securing rings.

The present invention brings important advantages.

Firstly, the method disclosed allows production of the load-carrying platform of industrial vehicle bodies, as well as production of the front panel, in an extremely simple and rapid way.

Secondly, the method allows bodies to be obtained with a platform that is perfectly smooth both on the top and on the bottom. As a result, on one hand material does not need to be cut out of the cross members or the longitudinal members, and on the other hand any problem involving infiltration by dirt and consequent deterioration is avoided.

In addition, thanks to the present invention, even operations for mounting the platform on the body chassis are much simpler. For example, the latter may be produced separately, independently of the platform which can then be simply rested on the finished chassis and fixed to it. Alternatively, the chassis may be produced directly on the body platform turned upside-down to act as a supporting surface.

It should also be noticed that the present invention is relatively easy to produce and even the cost linked to implementation of the invention is not very high.

The invention described may be modified and adapted without thereby departing from the scope of the inventive concept as defined by the appended claims.

All details of the invention may be substituted by other technically equivalent elements and, in practice, all of the materials used, as well as the shapes and dimensions of the various components, may be any according to requirements.

## Claims

1. A method for production of the load-carrying platform of industrial vehicle bodies which are more than 1500 mm wide, **characterised in that** it comprises the operating steps of:
forming at least a first and a second shaped piece (3) of flat material, each piece (3) having at least one main edge (4) for connection to the other piece (3);
welding the main edges (4) together end to end to produce a third, single piece (5);
bending the third piece (5) of material to produce the load-carrying platform (1).

2. A method for production of the load-carrying platform of industrial vehicle bodies which are more than 1500 mm wide, **characterised in that** it comprises the operating steps of:
welding together two sheets of flat material;
forming, from said welded together sheets of flat material, at least a first and a second shaped piece (3) of flat material, each piece (3) having at least one main edge (4) welded end to end to the main edge (4) of the other piece (3) to define with it a third, single piece (5);
bending the third piece (5) of material to produce the load-carrying platform (1).

3. The method according to claim 1 or 2, **characterised in that** the bending step involves the production of at least one protective guard (9) along an edge of the platform (1).

4. The method according to claim 3, **characterised in that** production of the guard (9) also involves bending, at least partly over itself, at least one lateral edge of the third piece (5) of shaped material.

5. The method according to claim 4, **characterised in that** the step of producing the guard (9) also involves the production of a supporting element (12) with an L-shaped cross-section under the guard (9), the supporting element (12) being obtained with another bend in the lateral edge.

6. The method according to claim 3, 4 or 5, **characterised in that** the bending step involves the production of a protective guard (9) along three edges of the platform (1): two lateral edges and one rear edge.

7. The method according to any of the claims from 3 to 6, **characterised in that** the step of forming the pieces (3) involves the production on at least one piece (3) of a plurality of openings (17) at a portion of the piece (3) designed to constitute the protective guard (9), the openings (17) being designed, after the bending step, to constitute passages (18) for hinges used to fix the body panels.

8. The method according to any of the foregoing claims, **characterised in that** forming said pieces (3) of shaped material involves forming two pieces (3) of material designed to constitute two longitudinal halves of the body.

9. The method according to any of the foregoing claims, also comprising an operating step of smoothing the third piece (5) of material at the weld made between the main edges (4) of the pieces (3) of which it consists.

10. The method according to claim 9, **characterised in that** the smoothing step involves rolling the weld.

11. The method according to claim 9, **characterised in that** the smoothing step involves mechanical working on the weld.

12. The method according to any of the foregoing claims, **characterised in that** the bending step also involves the production of a front panel (2) of the body.

13. The method according to claim 12, **characterised in that** the bending step also involves the production of two front uprights (16) connected laterally to the front panel (2)

## Patentansprüche

1. Verfahren zur Herstellung der Fahrzeugladefläche von Nutzfahrzeugaufbauten, welche mehr als 1500 mm breit sind, **dadurch gekennzeichnet, dass** es die folgenden Betriebsphasen enthält:
- Formen von wenigstens einem ersten und einem zweiten profilierten Teil (3) aus flachem Material, wobei jedes Teil (3) wenigstens eine Hauptkante (4) für den Anschluss an das andere Teil (3) aufweist;
- Verschweissen der Hauptkanten (4) miteinander von Ende zu Ende, um ein drittes einziges Teil (5) herzustellen;
- Biegen des dritten Teils (5) aus Material, um die Fahrzeugladefläche (1) herzustellen.

2. Verfahren zur Herstellung der Fahrzeugladefläche von Nutzfahrzeugaufbauten, welche mehr als 1500 mm breit sind, **dadurch gekennzeichnet, dass** es die folgenden Betriebsphasen enthält:
- Verschweissen der beiden Platten aus flachem Material miteinander;
- Formen aus den genannten, miteinander verschweissten Platten aus flachem Material von wenigstens einem ersten und einem zweiten profilierten Teil (3) aus flachem Material, wobei jedes Teil (3) wenigstens eine Hauptkante (4) aufweist, die von Ende zu Ende mit der Hauptkante (4) des anderen Teils (3) verschweisst ist, um zusammen mit diesem ein drittes einziges Teil (5) zu bilden;
- Biegen des dritten Teils (5) aus Material, um die Fahrzeugladefläche (1) herzustellen.

3. Verfahren nach Patentanspruch 1 oder 2, **dadurch gekennzeichnet, dass** die Biegephase die Herstellung von wenigstens einem Schutzrand (9) entlang einer Kante der Ladefläche (1) einbezieht.

4. Verfahren nach Patentanspruch 3, **dadurch gekennzeichnet, dass** die Herstellung des Schutzrandes (9) ebenfalls das Biegen um sich selbst, wenigstens teilweise, von wenigstens einer seitlichen Kante des dritten Teils (5) aus profiliertem Material einbezieht.

5. Verfahren nach Patentanspruch 4, **dadurch gekennzeichnet, dass** die Phase der Herstellung des Schutzrandes (9) ebenfalls die Herstellung eines Trägerelementes (12) von einem L-förmigen Querschnitt unter dem Schutzrand (9) einbezieht, wobei das Trägerelement (12) durch ein weiteres Biegen der seitlichen Kante erhalten ist.

6. Verfahren nach Patentanspruch 3, 4 oder 5, **dadurch gekennzeichnet, dass** die Biegephase die Herstellung eines Schutzrandes (9) entlang von drei Kanten der Ladefläche (1) einbezieht: das heisst zwei Seitenkanten und eine hintere Kante.

7. Verfahren nach einem beliebigen der Patentansprüche von 3 bis 6, **dadurch gekennzeichnet, dass** die Phase des Formens der Teile (3) die Herstellung an wenigstens einem Teil (3) von einer Anzahl von Öffnungen (17) an einem Abschnitt des Teils (3) einbezieht, der dazu bestimmt ist, den Schutzrand (9) zu bilden, wobei die Öffnungen (17) dazu vorgesehen sind, nach der Biegephase Durchlässe (18) für Scharniere zu bilden, die zum Befestigen der Ladeflächenwände benutzt werden.

8. Verfahren nach einem beliebigen der vorstehenden Patentansprüche, **dadurch gekennzeichnet, dass** das Formen der genannten Teile (3) aus profiliertem Material das Formen von zwei Teilen (3) von Material einbezieht, dazu bestimmt, zwei längsverlaufende Hälften des Fahrzeugaufbaus zu bilden.

9. Verfahren nach einem beliebigen der vorstehenden Patentansprüche, ebenfalls enthaltend eine Arbeitsphase des Glättens des dritten Teils (5) aus Material entlang der Schweissnaht, die zwischen den Hauptkanten (4) der dieses bildenden Teile (3) hergestellt ist.

10. Verfahren nach Patentanspruch 9, **dadurch gekennzeichnet, dass** die Glättphase das Walzen der Schweissnaht vorsieht.

11. Verfahren nach Patentanspruch 9, **dadurch gekennzeichnet, dass** die Glättphase die mechanische Bearbeitung der Schweissnaht vorsieht.

12. Verfahren nach einem beliebigen der vorstehenden Patentansprüche, **dadurch gekennzeichnet, dass** die Biegephase ebenfalls die Herstellung einer vorderen Wand (2) des Fahrzeugaufbaus einbezieht.

13. Verfahren nach Patentanspruch 12, **dadurch gekennzeichnet, dass** die Biegephase ebenfalls die Herstellung von zwei vorderen Rungen (16) einbezieht, angeschlossen seitlich an die vordere Wand (2).

## Revendications

1. Un procédé de fabrication de la plateforme porte-charge de bennes de véhicules industriels ayant plus de 1 500 mm de largeur, **caractérisé en ce qu'**il comprend les phases opérationnelles consistant à :
former au moins une première et une deuxième pièce profilée (3) de matériau plat, chaque pièce (3) ayant au moins un bord principal (4) pour l'accouplement avec l'autre pièce (3) ;
souder ensemble bout à bout les bords principaux (4) pour réaliser une troisième pièce (5) unique ;
plier la troisième pièce (5) de matériau pour réaliser la plateforme porte-charge (1).

2. Un procédé de fabrication de la plateforme porte-charge de bennes de véhicules industriels ayant plus de 1 500 mm de largeur, **caractérisé en ce qu'**il comprend les phases opérationnelles consistant à :
souder ensemble deux feuilles de matériau plat ;
former, à partir desdites feuilles soudées ensemble de matériau plat, au moins une première et une deuxième pièce profilée (3) de matériau plat, chaque pièce (3) ayant au moins un bord principal (4) soudé bout à bout au bord principal (4) de l'autre pièce (3) pour définir avec celle-ci une troisième pièce (5) unique ;
plier la troisième pièce (5) de matériau pour réaliser la plateforme porte-charge (1).

3. Le procédé selon la revendication 1 ou 2, **caractérisé en ce que** la phase de pliage prévoit la réalisation d'au moins un protecteur (9) le long d'un bord de la plateforme (1).

4. Le procédé selon la revendication 3, **caractérisé en ce que** la réalisation du protecteur (9) prévoit aussi le pliage, au moins partiellement sur lui-même, d'au moins un bord latéral de la troisième pièce (5) de matériau profilé.

5. Le procédé selon la revendication 4, **caractérisé en ce que** la phase de réalisation du protecteur (9) prévoit aussi la réalisation d'un élément de support (12) de section en « L » au-dessous du protecteur (9) lui-même, l'élément de support (12) étant obtenu par un autre pliage du bord latéral.

6. Le procédé selon la revendication 3, 4 ou 5, **caractérisé en ce que** la phase de pliage prévoit la réalisation d'un protecteur (9) le long de trois bords de la plateforme (1) : deux bords latéraux et un bord arrière.

7. Le procédé selon l'une quelconque des revendications de 3 à 6, **caractérisé en ce que** la phase de formation des pièces (3) prévoit la réalisation, sur au moins une pièce (3), d'une pluralité d'ouvertures (17) au niveau d'une partie de la pièce (3) destinée à constituer le protecteur (9), les ouvertures (17) étant destinées, après la phase de pliage, à constituer des passages (18) pour des charnières servant à fixer les panneaux de la benne.

8. Le procédé selon l'une quelconque des revendications précédentes, **caractérisé en ce que** la formation desdites pièces (3) de matériau profilé prévoit la formation de deux pièces (3) de matériau destinées à constituer deux moitiés longitudinales de la benne.

9. Le procédé selon l'une quelconque des revendications précédentes, **caractérisé en ce qu'**il comprend aussi une phase opérationnelle consistant à lisser la troisième pièce (5) de matériau au niveau de la soudure effectuée entre les bords principaux (4) des pièces (3) qui la composent.

10. Le procédé selon la revendication 9, **caractérisé en ce que** la phase de lissage prévoit un laminage de la soudure.

11. Le procédé selon la revendication 9, **caractérisé en ce que** la phase de lissage prévoit un usinage mécanique de la soudure.

12. Le procédé selon l'une quelconque des revendications précédentes, **caractérisé en ce que** la phase de pliage prévoit aussi la réalisation d'un panneau avant (2) de la benne.

13. Le procédé selon la revendication 12, **caractérisé en ce que** la phase de pliage prévoit aussi la réalisation de montants avant (16) reliés latéralement au panneau avant (2).
